# EUROPÄISCHE PATENTSCHRIFT

(11) **EP 3 608 075 B1**
(45) Veröffentlichungstag und Bekanntmachung des Hinweises auf die Patenterteilung: **15.12.2021**
(21) Anmeldenummer: 19183748.3
(22) Anmeldetag: 02.07.2019
(51) Int. Cl.: B29C 33/38, B29C 33/42, F16G 1/10, F16G 1/28, F16G 5/08, F16G 5/20

(54) **ANTRIEBSRIEMEN MIT EINER PROFILIERTEN RIEMENSEITE**
DRIVE BELT WITH A PROFILED BELT SIDE
COURROIE D'ENTRAÎNEMENT DOTÉE D'UNE FACE DE COURROIE PROFILÉE

(30) Priorität: 08.08.2018 DE 102018213283
(43) Veröffentlichungstag der Anmeldung: 12.02.2020
(73) Patentinhaber: ContiTech Antriebssysteme GmbH, 30165 Hannover (DE)
(72) Erfinder: Kanzow, Henning, 30165 Hannover (DE); Gaska, Roman, 30165 Hannover (DE); Detke, Mark-Enno, 30165 Hannover (DE)
(74) Vertreter: Continental Corporation

(56) Entgegenhaltungen:
- EP-A1- 1 787 045
- BE-A- 337 896
- DE-T5-112013 004 149
- FR-A- 1 166 260
- JP-A- H11 190 398

## Beschreibung

Die Erfindung betrifft einen Antriebsriemen aus elastomerem Material mit einer Antriebs- und einer Rückenseite, von denen mindestens eine Seite eine Oberfläche aufweist, die mit einer geprägten Oberflächenstruktur versehen ist, d.h., dass mindestens eine Oberfläche des Antriebsriemens mit einer geprägten Struktur versehen ist. Weiterhin betrifft die Erfindung ein zur Herstellung eines solchen Riemens besonders geeignetes Verfahren sowie ein Werkzeug für dieses Verfahren.

Üblicherweise besitzen Antriebsriemen aus elastomerem Material eine Antriebsseite, die die Riemenscheiben des Hauptantriebs umschlingt und antreibt. Die gegenüberliegende Seite, nämlich die Riemenrückseite, ist in aller Regel die Seite, an der die Spannrollen und gegebenenfalls Umlenkrollen anliegen, kann aber auch untergeordnete Antriebsaufgaben übernehmen.

Riementriebe finden sich heute bei einer Vielzahl von Antriebskonstellationen und stellen eine einfache und effektive Möglichkeit der Kraftübertragung dar. Insbesondere bei Kraftfahrzeugmotoren sind Riementriebe seit langem bekannt und werden beispielsweise zum Antrieb von Steuerungen, Nockenwellen, Wasserpumpen, Klimakompressoren und Lichtmaschinen (Stromgeneratoren) eingesetzt. Für die Lichtmaschinen werden häufig Keilrippenriemen genutzt (multi-rib type), die auf ihrer Profilseite, d.h. ihrer Rippenseite, besonders hohe Drehmomente durch hohe Reibwerte der kraftschlüssiger Reibung übertragen können. Der Antrieb einer Wasserpumpe in einem Kraftfahrzeugmotor ist dabei ein typisches Beispiel für einen Antrieb über die Riemenrückseite. Bei Keilrippenriemen wird die Rippenseite, d.h. die Antriebsseite, auch "Unterbau" genannt.

Wichtig ist es also, dass nicht nur die Riemenantriebsseite einen ausreichend hohen Reibwert zur Übertragung hoher Drehmomente besitzt, sondern dass dies auch bei der Riemenrückseite und der rückseitigen Biegung und Umschlingung einer Rückenrolle der Fall ist. Nun ist aber die Riemenrückseite in den allermeisten Fällen auch der Ort, an dem Kennzeichnung des Riemens angebracht ist. Kennzeichnungen sind wichtig um die Herstellung und den Ursprung der Riemen zurückverfolgen zu können. Werden die Kennzeichnungen durch zu hohe Reibbelastungen zerstört, ist dies natürlich unerwünscht.

Man unterscheidet bei der Herstellung von Keilrippenriemen im Wesentlichen zwei Verfahren, nämlich das abtragende Schleifverfahren und das nicht abtragende Formverfahren.

Beim Schleifverfahren wird ein zylindrischer Keilrippenrohling mit glatter Oberfläche nach der vollständigen Vulkanisation auf einer Stahltrommel einer materialabtragenden Bearbeitung (Schleifen) unterzogen, wodurch auf seiner Außenseite, nämlich in den so genannten Unterbau, das Rippenprofil eingebracht/eingeschliffen wird.

Beim Formverfahren wird das Rippenprofil des Keilrippenrohlings bereits während der Vulkanisation erzeugt, nämlich durch eine zylindrische Vulkanisationsform, die auf ihrer Innenseite das Negativ des Rippenprofils aufweist und in welche der Keilrippenrohling vor bzw. während der Vulkanisation von innen eingepresst wird.

Auch die Profilierung oder Formgebung der Riemenrückseite ist an sich bekannt und wird aus unterschiedlichsten Gründen vorgesehen. So offenbart die DE 251271 C einen Keilriemen, bei dem unter anderem auf seiner Unterseite querverlaufenden Rillen angeordnet sind. Dadurch soll die Biegefähigkeit des Riemens erhöht werden. Eine besondere Eignung zum Antrieb über die Rückenflächen ist jedoch hier nicht erwähnt.

Querrillen auf dem Riemenrücken sind allerdings in den Fällen nachteilig, in denen Rückenrollen im Riementrieb vorhanden sind, da Querrillen im Betrieb merkbare Laufgeräusche verursachen.

Die US 2 548 135 offenbart ebenfalls einen Riemen in einem Riementrieb, wobei der Riemen mit auf seinem Rücken parallel verlaufenden Rippen versehen ist, die Lateralschwingungen beim rückseitigen Umlauf von Umlenkrollen ausgleichen sollen. Die EP 1 787 045 B1 offenbart einen Riementrieb mit einem als Keilrippenriemen ausgebildeten Antriebsriemen, dessen Rückseite geprägt ist, um eine höhere Reibung zu erreichen, d. h. einen Antriebsriemen nach dem Oberbegriff von Anspruch 1.

Zusätzlich ist die zugehörige Rückenrolle bzw. das Reibrad mit mehr oder weniger umlaufenden Nuten versehen, um einen Wasserablauf zu ermöglichen.

Die Prägung der Riemenrückseite soll als ein hier ein nicht näher bestimmtes Relief ausgebildet sein oder - ebenfalls nicht näher beschriebene - Nuten auf dem Riemenrücken ausbilden, deren Größenordnung bzw. Tiefe etwa im Bereich von 1 mm liegt. Diese Prägung kann entweder durch abtragende Bearbeitung hergestellt werden, was aufwendig und umweltbelastend ist, oder durch eine Prägung während der Vulkanisation.

Die Prägung während der Vulkanisation wird dabei mit einem Innenwerkzeug durchgeführt, welches auf seiner Außenseite mit einer Gewebebeschichtung versehen ist. Diese Gewebebeschichtung wird dann in den Vulkanisationsrohling eingedrückt und erscheint später, d.h. nach Vulkanisation, Vereinzelung und Umkrempeln auf dem Riemenrücken. Als Nachteile erscheinen hier einerseits die abtragende Bearbeitung und andererseits die relativ zahlreichen Bearbeitungsschritte während der Herstellung. Darüber hinaus entsteht durch eine Gewebebeschichtung als Negativ ein eher zufälliges Muster einer Prägung, welches im Hinblick auf den Reibwert und die Verschleißbeständigkeit der sich üblicherweise auf dem Riemenrücken befindlichen Kennzeichnung sicher noch nicht optimiert ist.

Die EP 0 232 575 B1 offenbart eine Lösung zur Bereitstellung eines hohen Reibwerts sowohl auf der Riemenvorderseite als auch auf der Riemenrückseite, bei welcher ein auf beiden Seiten mit einem Rippenprofil versehener Antriebsriemen vorgeschlagen wird. Die Rippen auf der Rückseite weisen dabei Quernuten auf, die die Rückwärtsbiegung um eine Rückenrolle ermöglichen und in solchen Grenzen halten soll, dass ein sicherer Betrieb ermöglicht und trotzdem ein sehr hoher Reibwert für den Rückenantrieb erreicht wird. Eine solche Ausbildung erfordert jedoch eine relativ komplizierte Herstellung und erhöht den Materialverbrauch und das Gewicht des Riemens. Weiterhin sind bei solchen Quernuten im Betrieb mit glatten Rückenrollen je nach Ausführung laute Laufgeräusche zu erwarten.

Die EP 1 643 157 B1 offenbart einen Zahnriemen mit einem weitgehend symmetrischen Rückentextil. Mit der symmetrischen Struktur und mit der Verwendung von S- und Z-geschlagenen Längsfäden soll die Ablaufneigung des Riemens vom Riementrieb reduziert werden. Der Nachteil eines Textils als Riemenrücken liegt in dem niedrigen Reibungsbeiwert im Vergleich zu einem Gummirücken und in den deutlich höheren Materialkosten. Solche Riemen sind nicht nur weniger elastisch, sondern werden auch im Betrieb relativ warm.

Da, wie oben gesagt, der Riemenrücken zunehmend eine Antriebsfunktion übernimmt, ist der Reibungsbeiwert (CoF = Coefficient of Friction, gemessen etwa nach SAE J2432) entscheidend, insbesondere auch bei Nässe. Die Kraft- und Momentenübertragung des Riemenrückens ist durch die Umschlingung und die Anpresskraft am Abtriebsrad, d.h. in diesem Fall an der Rückenrolle bestimmt. Der Reibungsbeiwert ist zudem über die Materialpaarung von Rollen und Riemen gekennzeichnet. Heutzutage ist es zur Energieeinsparung bzw. CO2-Einsparung üblich, dass die Vorspannkraft im Trieb abgesenkt wird. Eine Kraftübertragung über den Riemenrücken ist somit nicht mehr so sehr durch die Anpresskraft/Normalkraft, sondern vielmehr nur noch durch den Reibungsbeiwert beeinflussbar.

Auf der anderen Seite ergibt sich bei einer Profilierung oder Strukturierung des Riemenrücken ein weiterer nicht unwesentlicher Problemkreis, der darin besteht, dass einerseits möglichst wenig Verschleiß im Betrieb auftreten soll und dass andererseits auch Markierungen und Kennzeichnungen, die, wie oben dargestellt, üblicherweise auf dem Riemenrücken angebracht werden, über die gesamte Lebensdauer des Riemens erkennbar bleiben und nicht bereits frühzeitig abgerieben werden. Beide Eigenschaften werden sehr stark von der Art des Profils beeinflusst und hängen voneinander und natürlich direkt von den Reibungseigenschaften der Reibpaarung zwischen Riemen und Riemenscheibe ab.

Die Rückseiten von z. B. Keilrippenriemen können glatt sein, mit Folien oder Vliesen beschichtet, gepunkteten Strukturen oder Rillen aufweisen oder als gummiertes Kreuz-oder Cordgewebe ausgeführt sein. Diese Strukturen können etwa während der Vulkanisation von einer strukturierten Druckmanschette aufgeprägt werden. Die Druckmanschette wird dann wiederum auf einem Stahldorn während ihrer eigenen Vulkanisation strukturiert, wobei der Stahldorn mit einer Struktur versehen ist. Somit entspricht die Struktur auf dem Riemenrücken der Struktur auf dem Stahldorn der Manschette. Die Manschette selbst hat die dazu gehörige Negativstruktur.

Die so erhaltene Struktur des Riemenrückens erzeugt positive Effekte. Sie erhöht den Grip bei Nässe, so dass Aggregate über den Riemenrücken auch bei Nässe angetrieben werden können, und es werden optische Mängel kaschiert. Dadurch sinken die Ausschussraten in der Produktion.

Ein anderes Verfahren besteht darin, dass die Riemenrücken direkt geprägt werden. Bei diesen so genannten Schleifkeilrippenriemen werden die Keilrippen auf der Hauptantriebsseite (im Unterbau) nach der Vulkanisation durch mechanische Bearbeitung erzeugt, nämlich durch Schleifen. Diese Riemen können einen strukturlosen, ebenen Riemenrücken besitzen, wenn sie auf einer unstrukturierten Trommel aufgebaut und vulkanisiert werden, oder aber einen strukturierten Rücken aufweisen, wenn sie auf einer strukturierten Trommel aufgebaut und vulkanisiert worden sind. Die Struktur der Trommel stellt dabei die Negativform der Struktur dar, die sich auf dem Riemenrücken abbildet.

Wurde die Trommel also mit einer gekreuzten Rändelstruktur versehen, besteht die Struktur auf dem Riemen, bei z. B. Keilrippenriemen auf dem Riemenrücken, aus erhabenen gekreuzten Graten. Zwischen diesen Graten gibt es rautenförmige Vertiefungen, die man als umgekehrte Pyramidenstümpfe bezeichnen kann. Allerdings haben diese Vertiefungen bei den bisher bekannten Verfahren nur eine sehr flache Struktur mit einer Tiefe von 0,01 bis 0,03mm. Damit werden z. B. optische Mängel nur unzureichend kaschiert.

Weiterhin ergibt sich ein Zielkonflikt, der darin besteht, dass eine zu tiefe Struktur bekanntermaßen zu Problemen beim Abziehen des vulkanisierten Riemenwickels von der Vulkanisationstrommel führt. Eine zu flache Struktur reicht aber nicht immer aus, um optische Fehler zu kaschieren.

Der Riemenrücken wird darüber hinaus in der Serie durch Farbübertrag mittels einer Kennzeichnungsfolie beschriftet. Die Beschriftung ist unbedingt notwendig zur Ermittlung der Identität des Riemens (Kundenteilenummer, Dimension, Produktionsrückverfolgbarkeit). Im Betrieb schleift sich diese Kennzeichnung zu schnell ab, wodurch sie unleserlich wird. Dies geschieht sowohl bei Riemen mit der Schleifkeilrippenriemenrückenstruktur mit gekreuzten Graten als auch bei den Formriemen mit gekreuzten Rillen.

Eine andere Art der Strukturierung des Riemenrückens besteht darin, dass als Decklage ein (gummiertes) Textil eingesetzt wird. Damit hat man zwar eine gewisse Strukturierung, erhöht aber auch die Herstellkosten der Riemen und nimmt den erhöhten Aufwand bei der Produktion solcher Riemen in Kauf.

Oft wird als Decklage für Antriebsriemen eine faserhaltige, vulkanisierte Gummimischung eingesetzt, wobei die Fasern meist aufwendig in einem zusätzlichen Arbeitschritt vor der Konfektion der Riemen quer zur Umfangsrichtung orientiert werden. Diese Fasern dienen dazu, die Zugstranglage zu verbessern. Das Herstellen von Fasermischungen und das Querorientieren der Fasern sind jedoch aufwendig und teuer. Außerdem haben Riemen mit faserhaltigen Mischungen einen geringeren Grip (geringeren Reibbeiwert) zu den Scheiben und verschleißen schneller als faserfreie Mischungen.

Für die Erfindung bestand also die Aufgabe, einen Antriebsriemen bereitzustellen, der in üblicher Konstruktion und in leichter Bauweise die Möglichkeit bietet, über Rückenrollen weitere Aggregate sicher anzutreiben, der von Anfang an hohe Reibwerte realisieren lässt und demzufolge über seine gesamte Lebensdauer hohe Antriebsmomente übertragen kann.

Die Aufgabe bestand weiterhin darin, eine Struktur zu finden, bei der das Verschleißen der Kennzeichnung deutlich verzögert wird, damit die Rückenkennzeichnung möglichst lange lesbar bleibt. Darüberhinaus soll der der Riemen sich durch eine möglichst geringe Ablaufneigung von den Rückenrollen auszeichnet.

Weiterhin soll das Abziehen des vulkanisierten Riemenwickels von einer strukturierten Vulkanisationstrommel möglich sein, ohne dass der Wickel dabei Gefahr läuft, beschädigt zu werden. Letztlich soll die Rückenstruktur kleine optische Fehler verbergen, wie etwa Unebenheiten oder kleine Beschädigungen der Trommel.

Weiterhin ist es wünschenswert, die Strukturierung des Riemenrückens mittels Rändelung der Aufbautrommel beizubehalten, da das ein sehr gut reproduzierbarer, also robuster Prozess ist.

Gelöst wird diese Aufgabe durch einen Antriebsriemen mit den Merkmalen des Hauptanspruchs. Die Erfindung betrifft auch ein besonders geeignetes Formverfahren zur Herstellung von Antriebsriemen, insbesondere Keilrippenriemen, gemäß dem unabhängigen Verfahrensanspruch sowie ein besonderes Werkzeug zur Durchführung des Verfahrens.

Weitere vorteilhafte Ausbildungen sind in den jeweiligen Unteransprüchen offenbart. Ebenfalls offenbart ist ein zur Herstellung des erfindungsgemäßen Riemens besonders geeignetes Verfahren.

Zur Verdeutlichung der erfindungsgemäßen Ausbildung und besseren Unterscheidung der Ausbildung und Formgebung auf Riemenantriebsseite und Riemenrückseite soll im Weiteren bei der Formgebung der Antriebsseite von "Profilierung" die Rede sein, während die Formgebung einer Riemenrückseite, beispielsweise der Rückseite von Keilrippenriemen, als "Struktur" bzw. "Strukturierung" bezeichnet wird.

Dabei ist die Oberflächenstruktur als ein im elastomeren Material ausgeprägtes Muster aus gekreuzten Vorsprüngen bzw. erhabenen Graten ausgebildet ist und die Vorsprünge oder Grate schließen eine Vielzahl von Aussparungen ein, deren Grundflächen jeweils durch Teilstücke der Oberfläche der Antriebs- oder Rückenseite gebildet werden, wobei die Höhe h der Grate mehr als 0,05 mm und weniger als 0,5 mm beträgt. Als Aussparung ist hier eine Art leerer Raum (void) zwischen den Graten oder Vorsprüngen zu verstehen, der bis auf die Riemenrückseite zurückreicht.

Durch eine solche Ausbildung der rückseitigen Oberfläche eines Antriebsriemens erreicht man eine unerwartete Verbesserung des Reibungskoeffizienten CoF beim Antrieb über die Riemenrückseite, d.h. eine deutlich verbesserte Momenten- und Kraftübertragung während der Umschlingung von Rückenrollen, insbesondere bei Nässe. Die Vorspannkraft kann also abgesenkt werden, ohne die Antriebsleistung zu stark verringern zu müssen.

Gleichzeitig vereinfacht sich das Ablösen von der Vulkanisationstrommel.

Ebenfalls erreicht man, dass kleine Unebenheiten und unschöne Oberflächen nicht mehr sichtbar sind, während Markierungen lange sichtbar bleiben. Dies entsteht durch den relativ großen "Leerraum", der sich bei der Markierung durch Farbe füllen kann. Die Vorsprünge oder Grate, deren Spitzen an der Reibpaarung beteiligt sind, halten die Farbe dann aus dem eigentlichen "Verschleißgebiet" heraus,

Dies geht einher mit einem weiteren außerordentlich vorteilhaften Effekt, der darin besteht das der Reibungskoeffizient in Bezug auf die Verbindung zwischen Riemenrückseite und Rückenrolle bereits von Anfang an, das heißt vom Aufziehen bzw. Auflegen des neuen Riemens an, sehr hoch ist und dazu über die gesamte Lebensdauer des Riemens gleich bleibt. Dies führt vorteilhafterweise dazu, dass die bisher üblichen "Einlaufeffekte" nicht auftreten und von vornherein mit einer gleich bleibenden Leistungsübertragung beim Antrieb einer Rückenrolle gerechnet und geplant werden kann.

Eine vorteilhafte Weiterbildung besteht darin, dass sich die Grate ausgehend von der jeweiligen Oberfläche nach außen verjüngen, sich somit die Aussparungen (voids) ausgehend von der Oberfläche pyramidenstumpf-förmig nach außen erweitern, sowie darin, dass die Aussparungen jeweils rautenförmige, vierseitige Teilstücke der Oberfläche als Grundflächen aufweisen. Dies verbessert die bereits oben genannten positiven Wirkungen und vereinfacht zudem die Herstellung. Natürlich kann auch jede andere Form von Pyramidenstumpf als Profil auf den Riemenrücken aufgebracht werden, jedoch ist es für das Ausbilden eines erhöhten Reibungskoeffizienten wichtig, dass Grundflächen und Dachflächen, das sind z. B. die Oberflächen von entsprechenden Vorsprüngen in einem zugehörigen Prägewerkzeug, im Wesentlichen parallel ausgebildet sind

Eine weitere erfindungsgemäße Ausbildung besteht darin, dass die Oberflächenstruktur, also die Ausrichtung und Geometrie der Grate in Bezug auf die Längsachse des Antriebsriemens derart symmetrisch ausgebildet ist, dass beim Ablauf des Antriebsriemens auf einer Riemenscheibe quer zur Laufrichtung des Antriebsriemens wirkende Kräfte kompensiert oder minimiert werden. Dies wird bei der vorliegenden Erfindung auf besonders einfache Weise dadurch erreicht das die Oberflächenstruktur bildende Muster auf dem Riemen spiegelsymmetrisch zu einer gedachten Fläche ausgebildet ist, welche orthogonal auf der Antriebs- oder Rückenseite stehend die Mittellinie des Riemens beinhaltet.

Eine weitere vorteilhafte Ausbildung besteht darin, dass die Vorsprünge oder Grate auf der Riemenrückseite unter Berücksichtigung üblicher Fertigungstoleranzen eine Höhe h von 0,06mm ≤ h ≤ 0,2- aufweisen. Dies gestaltet dem Herstellungsprozess besonders kostengünstig und führt dazu, dass keinerlei nachteilige Produkteigenschaften auftreten. Diese Maßgabe führt außerdem dazu, dass eine weitere Verbesserung des Reibungskoeffizienten, insbesondere bei Nässe, im Vergleich zu Profilierungen aus dem Stand der Technik oder zu nicht profilierten Riemenrücken erreicht wird.

Eine weitere vorteilhafte Ausbildung besteht darin, dass die die Struktur aufweisende Oberfläche aus einem faserfreien elastischen Vulkanisat besteht. Der Antriebsriemen behält dadurch seine gute elastische Struktur. Darüber hinaus wird auch hier der Herstellungsprozess kostengünstiger, da sich die Mischungsherstellung vereinfacht und ein einstufiges Mischverfahren völlig ausreicht.

Eine weitere vorteilhafte Ausbildung in diesem Sinnen besteht darin, dass das elastische Vulkanisat vernetztes HNBR, EPDM, EPM oder Blends aus vernetztem HNBR, EPDM und/oder EPM enthält.

Eine weitere vorteilhafte Ausbildung besteht darin, dass das die Oberflächenstruktur aufweisende elastomere Material ein peroxidisch vernetztes Elastomer ist. Durch eine solche Ausbildung erreicht man eine wesentlich bessere Wärmealterung des Riemenmaterials.

Für Antriebsriemen, die in der Umgebung von Verbrennungsmotoren insbesondere im KFZ-Bereich eingesetzt werden, ist nämlich eine hohe Temperaturbeständigkeit erforderlich. Der erfindungsgemäße Einsatz von peroxidisch vernetzten EPDM oder EPM-Mischungen als Elastomere für Keilrippenriemen und peroxidisch vernetzten HNBR-Mischungen als Elastomere für Zahnriemen sind diesbezüglich besonders vorteilhaft.

Die erfindungsgemäße Riemenausbildung eignet sich besonders für Antriebsriemen mit einer antriebsseitigen Profilierung, vorzugsweise ausgebildet als Keilrippenriemen, bei dem die Rückenseite mit der erfindungsgemäß geprägten Oberflächenstruktur versehen ist. Bei solchen Keilrippenriemen ist das Herstellverfahren bereits so ausgelegt, dass eine rückenseitige Profilierung besonders leicht zu realisieren und damit kompatibel mit dem Herstellverfahren ist.

Natürlich können auch andere Arten von Antriebsriemen, wie zum Beispiel Flachriemen, Keilriemen oder Zahnriemen, in der erfindungsgemäßen Weise mit einer Oberflächenstruktur auf dem Riemenrücken versehen werden. Auch damit ergeben sich die bereits genannten Vorteile und es ist möglich, für die jeweils vorliegende Antriebssituation einen bestens angepassten Riementrieb vorzusehen, der alle Anforderungen im Hinblick auf das zu übertragende Drehmoment und die übrigen genannten Eigenschaften erfüllt.

Bei Zahnriemen, Keilriemen und Keilrippenriemen ist dann erfindungsgemäß jeweils die Riemenrückenseite mit einer Oberflächenprägung versehen. Diese Ausführung begünstigt den Antrieb von Nebenaggregaten mit dem ansonsten flachen Riemenrücken. Bei Flachriemen können natürlich sowohl die Innenseite oder Antriebsseite als auch die Rückenseite mit dem erfindungsgemäßen Profil versehen sein.

Zur Herstellung eines solchen Antriebsriemens mit einer zum Antrieb von Nebenaggregaten vorgesehenen Riemenrückseite ist ein Verfahren besonders geeignet, bei dem bei dem das Profil der Riemenrückseite durch ein formgebendes Werkzeug geprägt wird, welches das Negativ des Profils aufweist, vorzugsweise durch eine Trommel oder Rolle geprägt wird. Dadurch wird die rückseitigen Oberfläche des Antriebsriemenrohlings mit einem Muster aus gekreuzten Vorsprüngen bzw. erhabenen Graten versehen, wobei zuvor das Negativ des Profils auf dem Werkzeug in Form einer Vielzahl pyramidenstumpf-förmiger Vorsprünge durch eine Rändelung des Werkzeugs und ein nachträgliches Polieren und/oder Schleifen hergestellt wird.

Bei einem solchen Verfahren zur Riemenherstellung kann in einem Arbeitsgang mit der Vulkanisation auch das Riemenrückenprofil des Antriebsriemenrohlings eingeformt werden.

Dadurch, dass das Werkzeug zunächst gerändelt und dann poliert oder geschliffen wird, werden auch etwaige beim Rändeln entstandene Materialverformungen und Grate abgetragen. Dies sind übliche und gut beherrschbare Verarbeitungsverfahren für metallische Oberflächen. Zudem erreicht man dadurch, dass ein Ablösen des Riemenrückens von der Vulkanisationstrommel weiter optimiert wird.

Anhand eines Ausführungsbeispiels soll die Erfindung näher erläutert werden. Es zeigen
- Fig. 1: prinzipiell in einem vergrößerten Schnitt durch das Profil eines erfindungsgemäßen Antriebsriemens,
- Fig. 2: in vergrößerter Form die mit einer entsprechend negativ ausgebildeten Oberflächenstruktur der Vulkanisations-und Prägetrommel,
- Fig. 3, 4: Mikroskopiebilder in 50-facher Vergrößerung zur Darstellung eines Verschleiß- bzw. Abriebversuchs,
- Fig. 5, 6: eine prinzipielle Ausbildung der erfindungsgemäßen Oberflächenstruktur mit Graten und Aussparungen.

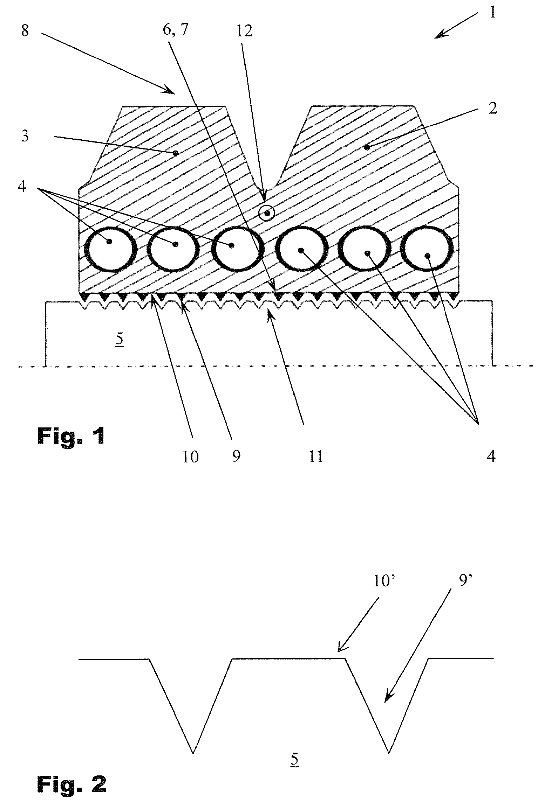

Die Fig. 1 zeigt prinzipiell in einem vergrößerten Schnitt durch das Profil eines erfindungsgemäßen Antriebsriemens während der Herstellung der mit einer Oberflächenstruktur geprägten Riemenrückseite. Der Antriebsriemen ist als Keilrippenriemen 1 mit den beiden Rippen 2 und 3 auf seiner Antriebsseite ausgebildet. Innerhalb des Keilrippenriemens 1 sind in Längsrichtung Zugträger 4 angeordnet, hier ausgebildet als Polyestercorde.

Der Keilrippenriemen 1 befindet sich auf einer ebenfalls prinzipiell und im Halbschnitt dargestellten Vulkanisations- und Prägetrommel 5, mit deren Hilfe die Oberflächenstruktur 6 auf Riemenrückseite 7 aufgeprägt wird. Somit weist der Keilrippenriemen auf seiner Antriebsseite 8 eine Keilrippen-Profilierung mit den beiden nebeneinander liegenden Rippen 2 und 3 auf, während auf seiner Rückseite 7 eine geprägte Oberflächenstruktur 6 vorgesehen ist.

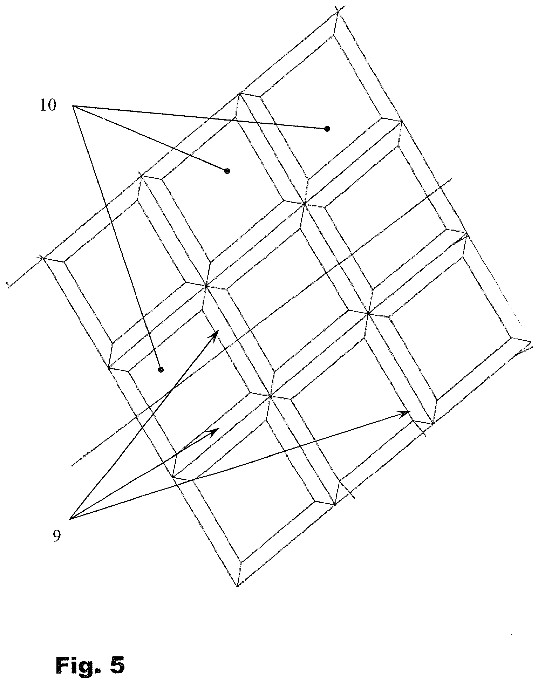

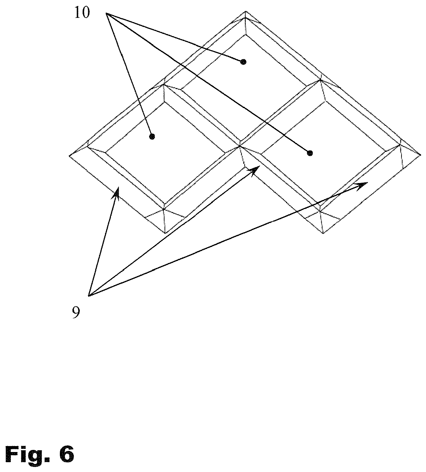

Die Oberflächenstruktur 6 ist als ein im elastomeren Material ausgeprägtes Muster aus gekreuzten Vorsprüngen bzw. erhabenen Graten 9 ausgebildet und die Vorsprünge oder Grate schließen eine Vielzahl von Aussparungen 10 ein, deren Grundflächen jeweils durch Teilstücke der Oberfläche der Antriebs- oder Rückenseite gebildet werden. Dies erschließt sich am besten in der Zusammenschau der Fig. 1 mit den Fig. 5 und 6. Die Aussparungen 10 wiesen jeweils rautenförmige, vierseitige Teilstücke der Oberfläche als Grundflächen auf.

Darüber hinaus ist die Oberflächenstruktur der Riemenrückseite, d.h. die Struktur der Grate 9 und Aussparungen 10 in ihrer Geometrie in Bezug auf die Längsachse 12 des Antriebsriemens derart zur Längsachse des Riemens symmetrisch ausgebildet, dass beim Ablauf des Antriebsriemens auf einer Riemenscheibe quer zur Laufrichtung des Antriebsriemens wirkende Kräfte kompensiert oder minimiert werden. In der Fig. 1 ist die Längsachse 12 des Antriebsriemens als Spitze eines aus der Zeichnungsebene heraustretenden Pfeiles dargestellt.

Die Figur 2 zeigt dagegen in vergrößerter Form die entsprechend negativ ausgebildete Oberflächenstruktur 11 der Vulkanisations-und Prägetrommel 5. Hier entsprechen also die Vorsprünge 10' den Aussparungen 10 auf der Oberfläche des Riemenrückens und die Nuten oder Einkerbungen 9' den Graten 9.

Die Höhe h der Grate bzw. der Einkerbungen beträgt hier 0,15 +/- 0,05 mm. Ausgehend von der jeweiligen Grundfläche bzw. Oberfläche des Riemenrückens verjüngen sich die Grate nach außen bis zur Bildung einer Spitze.

Die negativ ausgebildete Oberflächenstruktur 11 auf der Trommel ist durch Rändeln hergestellt worden. Beim Rändeln entstehen allerdings neben den gerändelten Nuten oder Einkerbungen 9' gelegentlich unerwünschte Materialquetschung in Form von Erhebungen oder Spitzen, die bei der Vulkanisation dazu führen dass sich das elastomere Material dort verhakt und sich nicht von der Vulkanisationstrommeln abziehen lässt. Durch ein zusätzliches Abdrehen und Polieren der Trommel können diese Erhebungen beseitigt werden. Der Riemenrücken verhakt sich dann nicht mehr mit der Trommel.

Der die Oberflächenstruktur aufweisende Riemenrücken des Keilrippenriemens 1 besteht aus einem faserfreien elastischen Vulkanisat, welches einen Blend aus vernetztem HNBR und EPDM enthält. Es handelt sich hierbei um ein peroxidisch vernetztes Elastomer.

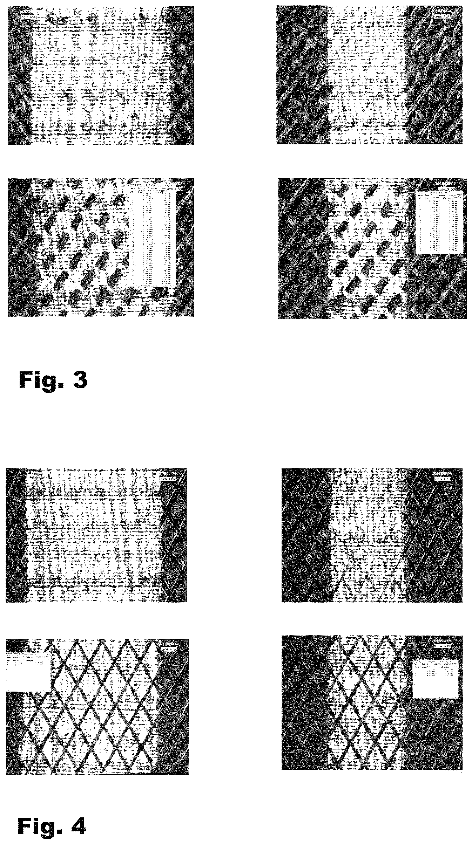

Die Fig. 3 und 4 zeigen einen weiteren Vorteil der erfindungsgemäßen Oberflächenstruktur, der darin besteht, dass Kennzeichnungen auf der mit einer Oberflächenstruktur versehenen Riemenseite auch nach erheblichem Belastungen bzw. erheblichem Verschleiß viel länger erhalten bzw. lesbar bleiben.

Dies ist auch bei starken Belastungen z.B. durch Schiefstellungen von Rückenrollen im Riementrieb der Fall. Die hierzu durchgeführten Versuche zeigen, dass bei einer erfindungsgemäßen Oberflächenstruktur Kennzeichnungen sehr viel länger lesbar bleiben, als bei anderen Riemenrückenprofilformen aus dem Stand der Technik.

Dies liegt unter anderem daran, dass sich der größte Teil der Kennzeichnungsfarbe in den Tälern der Aussparungen 10 befindet, die jeweils rautenförmige, vierseitige Teilstücke der Oberfläche als Grundflächen aufweisen. Die dort befindliche Farbe hat somit auch im Auflagenbereich des Riemens auf den Riemenscheiben keinen Kontakt zu den Scheiben und kann daher nicht so schnell abgetragen werden.

Dies wurde mit Hilfe eines Crockmetertests (Test Method 8 / A.A.T.C.C. Crockmeter) mit einem CM5-Crockmeter der Fa. Atlas Electronic Devices nachgewiesen. Dazu wurden Riemenstücke mit 3 mm und 5 mm breiten, weißen Streifen markiert (Farbübertrag mittels einer Kennzeichnungsfolie) und die Riemenrücken dann mit 100 Hüben (d.h. 100 Reibbewegungen) auf Verschleiß getestet und die Riemen nach Verschleiß optisch auf den Verlust von weißer Farbe untersucht.

Bei den in den Fig. 3 und Fig. 4 gezeigten Bildern handelt es sich um Mikroskopiebilder der Oberflächen von Riemenrückseiten in 50-facher Vergrößerung. Dabei zeigen die oberen zwei Bilder jeweils die vergrößerten 5mm und 3 mm breiten Markierungen im Ursprungszustand und die unteren beiden Bilder dieselben Markierungen nach dem Verschleiß- bzw. Abriebversuch.

Figur 3 zeigt dabei eine aus dem Stand der Technik bekannte Oberflächenstruktur mit einer weißen Markierung. Der Versuch mit der in Figur 3 markierten Riemenoberfläche aus dem Stand der Technik führte zu einem mittleren Abrieb der weißen Kennzeichnungsfarbe von 26,5%, wobei die absoluten Abriebraten zwischen 23,8 % und 29,3% lagen

Figur 4 zeigt die erfindungsgemäße Oberflächenstruktur mit einer weißen Markierung. Der Versuch mit der in Figur 4 markierten erfindungsgemäßen Riemenoberfläche führte zu einem mittleren Abrieb der weißen Kennzeichnungsfarbe von 14,9%, wobei die absoluten Abriebraten zwischen 11,9 % und 18,4% lagen.

Die erfindungsgemäße Oberflächenstruktur führte fast zu einer Halbierung des Abriebs und verbesserte somit die Les- und Erkennbarkeit der Riemenrückenkennzeichnung deutlich.

### Bezugszeichenliste

### (Teil der Beschreibung)

- 1: Keilrippenriemen
- 2: Rippe des Keilrippenprofils
- 3: Rippe des Keilrippenprofils
- 4: Zugträger
- 5: Vulkanisations- und Prägetrommel
- 6: Oberflächenstruktur der Riemenrückseite
- 7: Riemenrückseite
- 8: Antriebsseite des Riemens
- 9: Grat
- 9': Nut (Negativform zum Grat)
- 10: Aussparung
- 10': Vorsprung (Negativform zur Aussparung)
- 11: Oberflächenstruktur der Vulkanisations- und Prägetrommel
- 12: Längsachse des Antriebsriemens

## Patentansprüche

1. Antriebsriemen (1) aus elastomerem Material mit einer Antriebs- und einer Rückenseite (7, 8), wobei die Rückenseite eine Oberfläche aufweist, die mit einer geprägten Oberflächenstruktur (6) versehen ist, **dadurch gekennzeichnet, dass** die Oberflächenstruktur (6) als ein im elastomeren Material ausgeprägtes Muster aus gekreuzten Vorsprüngen oder erhabenen Graten (9) ausgebildet ist, dass die Vorsprünge oder Grate (9) eine Vielzahl von Aussparungen (10) einschließen, deren Grundflächen jeweils durch Teilstücke der Oberfläche der Rückenseite gebildet werden, dass die Höhe h der Grate mehr als 0,05 mm und weniger als 0,5 mm beträgt, dass die Oberflächenstruktur (6) in Bezug auf die Längsachse (12) des Antriebsriemens (1) derart symmetrisch ausgebildet ist, dass beim Ablauf des Antriebsriemens auf einer Riemenscheibe quer zur Laufrichtung des Antriebsriemens wirkende Kräfte dadurch kompensiert oder minimiert werden, dass das die Oberflächenstruktur bildende Muster auf dem Riemen spiegelsymmetrisch zu einer gedachten Fläche ausgebildet ist, welche orthogonal auf der Antriebs- oder Rückenseite stehend die Mittellinie des Riemens beinhaltet.

2. Antriebsriemen nach Anspruch 1, bei dem sich die Grate ausgehend von der jeweiligen Oberfläche nach außen verjüngen.

3. Antriebsriemen nach Anspruch 1 oder 2, bei dem die Aussparungen (10) jeweils rautenförmige, vierseitige Teilstücke der Oberfläche als Grundflächen aufweisen.

4. Antriebsriemen nach einem der Ansprüche 1 bis 3, bei dem die Vorsprünge oder Grate (9) auf der Riemenrückseite unter Berücksichtigung üblicher Fertigungstoleranzen eine Höhe h von 0,06mm ≤ h ≤ 0,2- aufweisen.

5. Antriebsriemen nach einem der Ansprüche 1 bis 4, bei dem die die Struktur aufweisende Oberfläche (6, 7) aus einem faserfreien elastischen Vulkanisat besteht.

6. Antriebsriemen nach Anspruch 5, bei dem das elastische Vulkanisat vernetztes HNBR, EPDM, EPM oder Blends aus vernetztem HNBR, EPDM und/oder EPM enthält.

7. Antriebsriemen nach einem der Ansprüche 1 bis 6, bei dem das die Oberflächenstruktur (6) aufweisende elastomere Material ein peroxidisch vernetztes Elastomer ist.

8. Antriebsriemen nach einem der Ansprüche 1 bis 7, bei dem die Antriebsseite mit einem Keilrippenprofil , Keilprofil oder Zahnprofil ausgebildet ist.

## Claims

1. Drive belt (1) made of elastomer material, having a drive side and a rear side (7, 8), wherein the rear side has a surface which is provided with an embossed surface structure (6), **characterized in that** the surface structure (6) is formed as a pattern of cross projections or raised ridges (9) that is embossed in the elastomer material, **in that** the projections or ridges (9) enclose a plurality of recesses (10) whose base faces are each formed by sections of the surface of the rear side, **in that** the height h of the ridges is more than 0.05 mm and less than 0.5 mm, **in that** the surface structure (6) is designed to be symmetrical with respect to the longitudinal axis (12) of the drive belt (1) in such a way that forces acting transversely to the running direction of the drive belt when the drive belt is running on a belt pulley are compensated for or minimized by virtue of the fact that the surface-structure-forming pattern on the belt is formed mirror-symmetrically to an imaginary surface which, situated orthogonally on the drive or rear side, contains the centre line of the belt.

2. Drive belt according to Claim 1, in which the ridges taper outwardly starting from the respective surface.

3. Drive belt according to Claim 1 or 2, in which the recesses (10) each have rhombic, quadrangular sections of the surface as base faces.

4. Drive belt according to one of Claims 1 to 3, in which the projections or ridges (9) on the belt rear side have a height h of 0.06 mm ≤ h ≤ 0.2-when taking customary manufacturing tolerances into consideration.

5. Drive belt according to one of Claims 1 to 4, in which the surface (6, 7) having the structure consists of a fibre-free elastic vulcanizate.

6. Drive belt according to Claim 5, in which the elastic vulcanizate contains crosslinked HNBR, EPDM, EPM or blends of crosslinked HNBR, EPDM and/or EPM.

7. Drive belt according to one of Claims 1 to 6, in which the elastomer material having the surface structure (6) is a peroxidically crosslinked elastomer.

8. Drive belt according to one of Claims 1 to 7, in which the drive side is formed with a V-ribbed profile, wedge profile or tooth profile.

## Revendications

1. Courroie d'entraînement (1) en matériau élastomère pourvue d'un côté entraînement et d'un côté arrière (7, 8), le côté arrière ayant une surface qui est pourvue d'une structure de surface gaufrée (6), **caractérisée en ce que** la structure de surface (6) est conçue comme un motif en matériau élastomère formé de saillies croisées ou de nervures surélevées (9), **en ce que** les saillies ou nervures (9) incluent un grand nombre d'évidements (10) dont les surfaces de base sont chacune formées par des portions de la surface du côté arrière, **en ce que** la hauteur h des nervures est supérieure à 0,05 mm et inférieure à 0,5 mm, **en ce que** la structure de surface (6) est conçue symétriquement par rapport à l'axe longitudinal (12) de la courroie d'entraînement (1) de telle sorte que, lorsque la courroie d'entraînement court sur une poulie, des forces agissant transversalement au sens de déplacement de la courroie d'entraînement soient compensées ou minimisées de manière à ce que le motif formant la structure de surface sur la courroie soit formé à symétrie de miroir par rapport à une surface imaginaire qui contient, orthogonalement au côté entraînement ou arrière, la ligne centrale de la courroie.

2. Courroie d'entraînement selon la revendication 1, dans laquelle les nervures s'amincissent de la surface respective vers l'extérieur.

3. Courroie d'entraînement selon la revendication 1 ou 2, dans laquelle les évidements (10) comportent chacun comme surfaces de base des portions de la surface qui sont en forme de losange à quatre côtés.

4. Courroie d'entraînement selon l'une des revendications 1 à 3, dans laquelle les saillies ou nervures (9) ont du côté arrière de la courroie, compte tenu des tolérances usuelles de fabrication, une hauteur h de 0,06 mm ≤ h ≤ 0,2.

5. Courroie d'entraînement selon l'une des revendications 1 à 4, dans laquelle la surface (6, 7) comportant la structure est en un vulcanisat élastique sans fibres.

6. Courroie d'entraînement selon la revendication 5, dans laquelle le vulcanisat élastique contient du HNBR, de l'EPDM et/ou de l'EPM réticulés ou des mélanges de HNBR, d'EPDM et/ou d'EPM réticulés.

7. Courroie d'entraînement selon l'une des revendications 1 à 6, dans laquelle le matériau élastomère comportant la structure de surface (6) est un élastomère à réticulation peroxydique.

8. Courroie d'entraînement selon l'une des revendications 1 à 7, dans laquelle le côté entraînement est formé avec un profil de cannelures, un profil cannelé ou un profil denté.
